# EUROPÄISCHE PATENTANMELDUNG

(11) **EP 0 534 101 A1**
(43) Veröffentlichungstag der Anmeldung: **31.03.1993**
(21) Anmeldenummer: 92113388.0
(22) Anmeldetag: 06.08.1992
(51) Int. Cl.: G01C 19/04, H05K 5/00

(54) **Hermetisch dichte Baugruppe**

(30) Priorität: 09.09.1991 DE 4129917
(71) Anmelder: Bodenseewerk Gerätetechnik GmbH, D-88662 Überlingen (DE)
(72) Erfinder: Neumann, Werner, W-7776 Owingen (DE)
(74) Vertreter: Weisse, Jürgen, Dipl.-Phys. Patentanwalt

(57) **Zusammenfassung**

Bei einer hermetisch dichten Baugruppe mit elektrischen Bauteilen, einem die elektrischen Bauteile umschließenden, einen hermetisch dicht abgeschlossenen Innenraum (76) bildenden Gehäuse (10) und Mitteln zur hermetischen Durchführung von elektrischen Verbindungen durch das Gehäuse (10) zum Anschluß der elektrischen Bauteile, ist zwischen dem ersten und dem zweiten Gehäuseteil (12 bzw. 14) ein sich längs der Ränder der Gehäuseteile (12,14) erstreckender, flacher, isolierender Träger (52) angeordnet und längs einer ersten Dichtlinie mit dem ersten und längs einer zweiten, außerhalb der ersten Dichtlinie verlaufenden zweiten Dichtlinie mit dem zweiten Gehäuseteil (12 bzw. 14) hermetisch dicht verbunden. Es wird so ein erster Oberflächenteil (78) gebildet, der auf einer ersten Seite des Trägers (52) an den Innenraum (76) angrenzt und ein zweiter Oberflächenteil (80), der an einen Außenraum angrenzt. Auf der gegenüberliegenden Seite des Trägers (52) sind innerhalb des Innenraumes (76) Leiterbahnen (94) zur Verbindung mit den elektrischen Bauteilen gebildet. In dem Träger (52) sind im Bereich des zweiten Oberflächenteils (80) Durchführungen (86) mit metallisierten Flächen gebildet, die mit den Leiterbahnen (94) in Verbindung stehen. In die im Bereich des zweiten Oberflächenteils (80) gebildeten Durchführungen (86) sind Kontaktfinger (102) von Anschlußleitungen hermetisch eingelötet.

## Beschreibung

Die Erfindung betrifft eine hermetisch dichte Baugruppe mit
- elektrischen Bauteilen,
- einem die elektrischen Bauteile umschließenden, einen hermetisch dicht abgeschlossenen Innenraum bildenden Gehäuse mit einem ersten und einem zweiten Gehäuseteil und
- Mitteln zur hermetischen Durchführung von elektrischen Verbindungen durch das Gehäuse zum Anschluß der elektrischen Bauteile.

Die hermetisch dichte Baugruppe kann beispielsweise ein dynamisch abgestimmter Kreisel oder ein Beschleunigungsmesser sein. Es müssen Versorgungsleitungen zu elektrischen Bauteilen wie Spulen oder Antriebsmotoren in das Gehäuse eingeführt und Signalleitungen aus dem Gehäuse herausgeführt werden. Bei bekannten Konstruktionen wird dabei jede Leitung einzeln mittels einer Glasdurchführung durch das Gehäuse hindurchgeführt. Die Glasdurchführung kann dabei entweder unmittelbar in einen Durchbruch des Gehäuses eingeschmolzen sein oder eine metallische Außenhülse aufweisen, die in das Gehäuse eingelötet ist. In diesen Glasdurchführungen sitzen jeweils, ebenfalls eingeschmolzen, die durchzuführenden elektrischen Leiter. Diese einzelnen Glasdurchführungen erfordern einen hohen technischen Aufwand und äußerste Sorgfalt bei der Herstellung. Das direkte Einschmelzen von Glasdurchführungen in Gehäuse kann nur durch darauf spezialisierte Hersteller vorgenommen werden. Bei direktem Einschmelzen der Glasdurchführung in das Gehäuse treten zwei Grenzflächen auf, an denen die Teile hermetisch dicht miteinander verbunden sein müssen, nämlich einmal zwischen dem Glaskörper der Glasdurchführung und dem Gehäuse und zum anderen zwischen dem Glaskörper und dem elektrischen Leiter. Bei einer einzulötenden Glasdurchführung mit metallischer Außenhülse treten sogar drei Grenzflächen auf, nämlich zwischen Leiter und Glaskörper, zwischen Glaskörper und Außenhülse und zwischen Außenhülse und Gehäuse.

Der Erfindung liegt die Aufgabe zugrunde, bei einer hermetisch dichten Baugruppe der eingangs genannten Art die hermetische Durchführung von elektrischen Verbindungen durch das Gehäuse hindurch zu vereinfachen, sicherer zu machen und zu verbilligen.

Erfindungsgemäß wird diese Aufgabe dadurch gelöst, daß
(a) zwischen dem ersten und dem zweiten Gehäusteil ein sich längs der Ränder der Gehäuseteile erstreckender, flacher, isolierender Träger angeordnet und längs einer ersten Dichtlinie mit dem ersten und längs einer zweiten, außerhalb der ersten Dichtlinie verlaufenden zweiten Dichtlinie mit dem zweiten Gehäuseteil hermetisch dicht verbunden ist, so daß
(b) ein erster Oberflächenteil auf einer dem ersten Gehäuseteil zugewandten ersten Seite des Trägers an den Innenraum und ein zweiter Oberflächenteil des Trägers an einen Außenraum angrenzt,
(c) auf der gegenüberliegenden, dem zweiten Gehäuseteil zugewandten zweiten Seite des Trägers innerhalb des Innenraumes Leiterbahnen zur Verbindung mit den elektrischen Bauteilen gebildet sind,
(d) in dem Träger im Bereich des zweiten Oberflächenteils Durchführungen mit metallisierten Flächen gebildet sind, die mit den Leiterbahnen in Verbindung stehen, und
(e) in die im Bereich des zweiten Oberflächenteils gebildeten Durchführungen Kontaktfinger von Anschlußleitungen hermetisch eingelötet sind.

Auf diese Weise wird ein einziger isolierender Träger für die Durchführung aller elektrischen Verbindungen vorgesehen. Es hat sich gezeigt, daß durch das Einlöten der Kontaktfinger in die metallisierten Durchführungen eine einwandfreie hermetische Abdichtung erzielt werden kann. Auch die hermetische Verbindung des Trägers einerseits mit dem ersten und andererseits mit dem zweiten Gehäuseteil kann fertigungstechnisch einfach und sicher bewerkstelligt werden.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.
- Fig.1: zeigt einen Längsschnitt durch einen dynamisch abgestimmten Kreisel mit einem hermetisch abgeschlossenen Gehäuse und Durchführung der elektrischen Verbindungen mittels eines mit metallisierten Durchführungen und Leiterbahnen versehenen, ringscheibenförmigen isolierenden Trägers.
- Fig.2: ist eine abgebrochen-perspektivische Ansicht des isolierenden Trägers und veranschaulicht das Prinzip der elektrischen Durchführung.
- Fig.3: ist eine abgebrochen-perspektivische und längs einer Längsebene geschnittene Darstellung des isolierenden Trägers, ebenfalls zur Veranschaulichung der elektrischen Durchführung.
- Fig.4: zeigt einen abgebrochenen Längsschnitt des Trägers und der Gehäuseteile bei einer abgewandelten Ausführung des Trägers.
- Fig.5: ist eine perspektivische Darstellung der die Kontaktfinger bildenden mehradrigen, flächigen Leiterstruktur in einem flexiblen Isolierstoffstreifen ("Flex-Verbindung").
- Fig.6: zeigt in einem Längsschnitt einen aus einem Ziehteil gefertigten Deckel und Abschirmring.

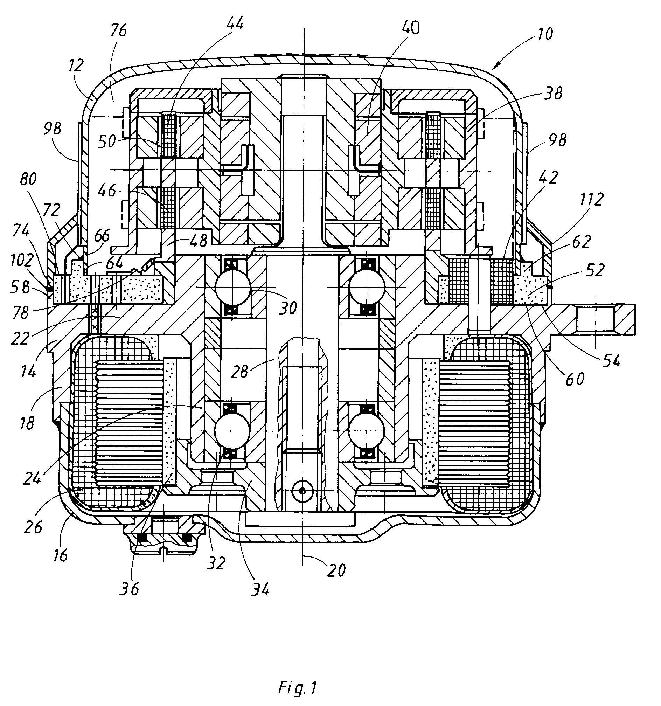

In Fig.1 ist mit 10 ein Gehäuse eines dynamisch abgestimmten Kreisels bezeichnet. Das Gehäuse 10 weist einen ersten Gehäuseteil 12 und einen zweiten Gehäuseteil 14 auf. An den zweiten Gehäuseteil 14 schließt sich ein dritter Gehäuseteil 16 an. Der erste Gehäuseteil 12 ist ein umgekehrt-topfförmiger Deckel, der das Gehäuse 10 an der in Fig.1 oberen Seite abschließt. Der dritte Gehäuseteil 16 ist ein schalenförmiger Teil, der mit dem zweiten Gehäuseteil längs seines Randes hermetisch dicht verbunden ist und das Gehäuse an der in Fig.1 unteren Seite abschließt. Der zweite Gehäuseteil 14 bildet einen Mittelteil des Gehäuses 10 mit einem im wesentlichen zylindrischen Außenring 18, einer senkrecht zur Achse 20 des Gehäuses 10 verlaufenden ringscheibenförmigen Zwischenwand 22 und einer sich an den Innenrand der Zwischenwand 22 anschließenden, koaxial zu dem Außenring 18 und der Achse 20 angeordneten Lagerhülse 24.

In dem von dem zweiten und dem dritten Gehäuseteil gebildeten Ringraum sitzt ein Stator 26 eines Antriebsmotors. In der Lagerhülse 24 ist eine Welle 28 in Kugellagern 30 und 32 gelagert. An ihrem dem dritten Gehäuseteil 16 zugewandten, über die Lagerhülse 24 hinausragenden Ende trägt die Welle 28 einen Rotorträger 34. Der Rotorträger 34 greift über die Stirnfläche der Lagerhülse 24 und trägt einen hohlzylindrischen, die Lagerhülse 24 koaxial umgebenden Rotor 36 des Antriebsmotors. Der Rotor 36 wirkt mit dem Stator 26 zusammen und treibt die Welle 28.

Mit der Welle 28 ist ein Kreiselrotor 38 über ein Kardangelenk 40 verbunden. Der Kreiselrotor 38 wird so über das Kardangelenk 40 und die Welle 28 von dem Antriebsmotor 26,36 angetrieben. Durch das Kardangelenk sind jedoch leichte Auslenkungen des Kreiselrotors 38 gegenüber der Welle 28 möglich. Das Kardangelenk 40 ist mit Kreuzfedergelenken aufgebaut. Solche Kreuzfedergelenke ergeben jedoch ein Rückstellmoment, das auf den Kreiselrotor 38 wirkt. Bei einer Auslenkung des Kreiselrotors aus seiner Mittellage wird aber auch ein dynamisches Moment durch den Kardanrahmen auf den Kreiselrotor 38 wirksam. Die Rückstellmomente der Kreuzfedergelenke und das dynamische Moment des Kardanrahmens sind so "dynamisch abgestimmt", daß sich die dadurch auf den Kreiselrotor 38 ausgeübten Drehmomente gerade kompensieren. Der Kreiselrotor 38 verhält sich dann bei kleinen Auslenkungen wie ein "freier" Kreisel

Der Kreisel ist elektrisch an seine Mittellage gefesselt. Zu diesem Zweck sind induktive Abgriffe vorgesehen, von denen in Fig.1 nur ein Abgriff 42 sichtbar ist. Der Abgriff 42 spricht auf Auslenkungen des Kreiselrotors 38 um eine zur Papierebene in Fig.1 senkrechte Eingangsachse an. Ein weiterer Abgriff ist dazu um 90° um die Achse 20 winkelversetzt angeordnet. Weiterhin sind Drehmomenterzeuger vorgesehen, durch welche Drehmomente auf den Kreiselrotor 38 ausübbar sind. In Fig.1 ist nur ein solcher Drehmomenterzeuger 44 sichtbar. Der Drehmomenterzeuger 44 übt ein Drehmoment auf den Kreiselrotor 38 ebenfalls um die zu der Papierebene von Fig.1 senkrechte Eingangsachse aus. Ein zweiter Drehmomenterzeuger ist um 90° um die Achse 20 zu dem Drehmomenterzeuger 44 winkelversetzt angeordnet. Der Drehmomenterzeuger 44 weist flache Torquerspulen 46 auf, die um die Achse 20 zylindrisch gekrümmt sind. Die Torquerspulen 46 sitzen in einem Spulenhalter 48. Der Spulenhalter 48 ragt in einen in dem Kreiselrotor 38 gebildeten zylindrischen Luftspalt 50.

Die Abgriffe 42 sind mit den Drehmomenterzeugern 44 "überkreuz" verbunden, wobei die Abgriffsignale durch geeignete Verstärkernetzwerke verstärkt oder auch einer digitalen Signalverarbeitung unterworfen werden. Es ist das Abgriffsignal jedes Abgriffs 42, der auf die Auslenkung des Kreiselrotors 38 um eine Eingangsachse anspricht, jeweils auf den Drehmomenterzeuger 44 geschaltet, der auf den Kreiselrotor 38 ein Drehmoment um die zu dieser Eingangsachse senkrechte andere Eingangsachse ausübt. Infolge der Kreiselgesetze erfolgt dadurch die "elektrische Fesselung" des Kreiselrotors an die Mittellage. Die Ströme, die dabei in den Wicklungen 46 der Drehmomenterzeuger 44 fließen sind proportional den Drehraten um die jeweils dem Abgriff zugeordneten Eingangsachsen.

Der bisher beschriebene Aufbau ist der übliche Aufbau eines dynamisch abgestimmten Kreisels. Das Gehäuse 10 eines solchen Kreisels ist zur Ausschaltung störender Umgebungseinflüsse üblicherweise hermetisch geschlossen und nach Evakuierung mit einem Schutzgas gefüllt. In dieses hermetisch dichte Gehäuse müssen elektrische Verbindungen zum Antrieb des Motors 26,36 und zum Heraus- und Hineinleiten von Meß- und Fesselsignalen hineingeführt werden. Diese hermetische Durchführung elektrischer Signale erfolgt auf folgende Weise:
Zwischen dem ersten und dem zweiten Gehäuseteil 12 bzw. 14 sitzt ein ringscheibenförmiger, isolierender Träger 52. Der Träger 52 besteht aus bearbeitbarer Oxidkeramik, z.B. "Grünkeramik". Der Träger 52 liegt auf einer Ringfläche 54 des zweiten Gehäuseteils 14 auf. Diese Ringfläche 54 ist von der dem ersten Gehäuseteil 12 zugewandten Oberfläche der Zwischenwand 22 gebildet. Der zweite Gehäuseteil 14 weist längs seines Umfangs anschließend an die Ringfläche 54 einen vorstehenden Rand 58 auf. Auf der Ringfläche 54 liegt zwischen der Ringfläche 54 und dem Träger 52 eine isolierende Schicht oder Folie 60. Der Träger ist zwischen dem Rand 58 und dem Spulenhalter 48 in radialer Richtung gehalten.

Der Träger weist eine dem ersten Gehäuseteil 12 zugewandte, in Fig.1 obere, erste Seite und eine auf der Ringfläche 54 des zweiten Gehäuseteils aufliegende, in Fig.1 untere, zweite Seite auf. Auf der ersten Seite ist im Abstand vom äußeren Rand des Trägers 52 an dem Träger 52 eine vorstehende, ringsherumlaufende Leiste 62 gebildet. Die Leiste 62 bildet auf ihrer Innenseite eine Stufe 64. Der erste Gehäuseteil 12 ist so auf den Träger 52 aufgesetzt, daß der Rand 66 des Gehäuseteils 12 mit seiner Außenfläche an der Stufe 64 anliegt.

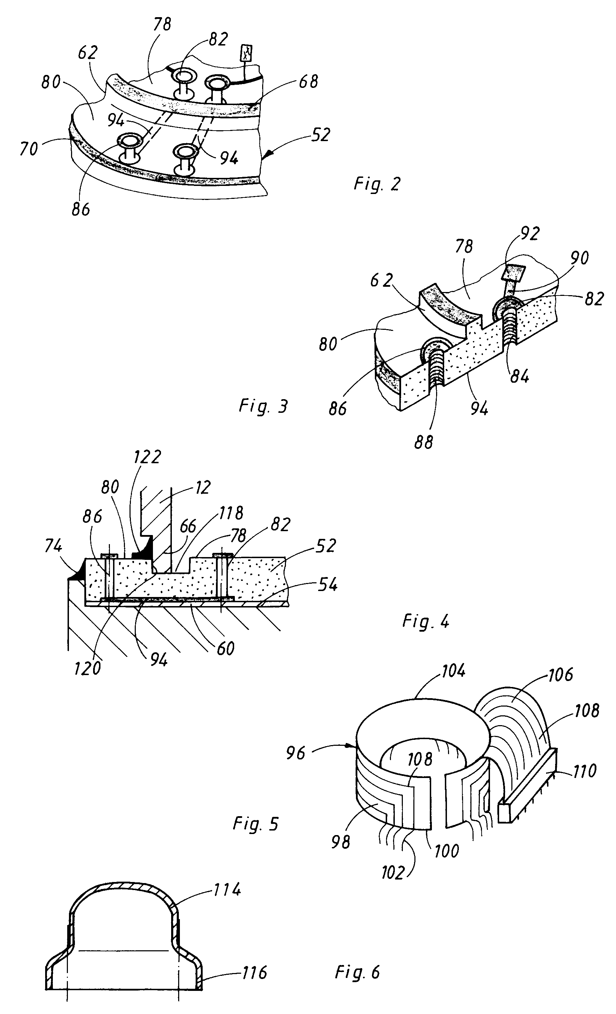

Wie am besten aus Fig.2 oder 3 ersichtlich ist, ist die Oberseite 68 der vorstehenden Leiste 62 metallisiert. Ebenso ist die "obere" Hälfte 70 der Mantelfläche des Trägers 52 metallisiert. Die metallisierte Oberseite 68 der Leiste 62 ist durch eine Lötnaht 72 hermetisch mit der Außenfläche des Randes 66 verbunden, Die metallisierte obere Hälfte 70 der Mantelfläche des Trägers 52 ist durch eine Lötnaht 74 hermetisch mit dem Rand 58 verbunden. Es wird auf diese Weise ein hermetisch dicht abgeschlossener Innenraum 76 gebildet, der von dem ersten Gehäuseteil 12, dem Träger zwischen innerer Lötnaht 72 und äußerer Lötnaht 74, dem zweiten und dem dritten Gehäuseteil begrenzt ist.

Auf der ersten (oberen) Seite des Trägers 52 werden auf diese Weise zwei Oberflächenteile 78 und 80 definiert: Der Oberflächenteil 78 liegt innerhalb der Lötnaht 72 und grenzt an den Innenraume 76 an. Der Oberflächenteil 80 liegt außerhalb der Lötnaht 72 und grenzt an den Außenraum oder einen damit in Verbindung stehenden Ringraum an. Wie am besten aus Fig.2 und 3 ersichtlich ist, sind in dem ersten Oberflächenteil 78 Durchführungen 82 von der ersten zur zweiten Seite des Trägers 52 vorgesehen. Die Durchführungen 82 sind von Bohrungen gebildet, deren Innenwandung mit einer Metallisierung 84 versehen ist. In ähnlicher Weise sind in dem zweiten Flächenteil 80 des Trägers 52 Durchführungen 86 von der ersten Seite zur zweiten Seite des Trägers 52 vorgesehen. Die Durchführungen 86 sind ebenfalls von Bohrungen gebildet, deren Innenwandung mit einer Metallisierung 88 versehen ist. Auf dem ersten Oberflächenteil 78 auf der ersten, oberen Seite sind Leiterbahnen 90 vorgesehen, welche in Lötkontakten 92 auslaufen. Über diese Leiterbahnen 90 und Lötkontakte 92 sind Verbindungen von den Anschlußdrähten der elektrischen Bauteile, z.B. des Motors oder des Abgriffs 42, zu den Durchführungen 82 hergestellt. Auf der zweiten, in Fig.1 unteren Seite des Trägers 52, die plan ist und auf der isolierenden Schicht oder Folie 60 aufliegt, sind Leiterbahnen 94 gebildet. Die Leiterbahnen 94 stellen eine Verbindung zwischen den Metallisierungen 84 und 88 der Durchführungen 82 bzw. 86 her.

Um die zylindrische Mantelfläche des ersten Gehäuseteils ist eine mehradrige, flächige Leiterstruktur in einem flexiblen Isolierstoffstreifen ("Flex- Verbindung") 96 manschettenartig herumgelegt. Der die Leiterstruktur enthaltende flexible Isolierstoffstreifen 96 enthält einen zylindrisch gebogenen Abschnitt 98, der den ersten Gehäuseteil 12 manschettenartig umgibt und längs seines dem Träger 52 und dem zweiten Gehäuseteil 14 zugewandten Randes 100 Kontaktfinger 102 aufweist. Die Kontaktfinger 102 sind in die Durchführungen 86 auf dem zweiten Oberflächenteil 80 des Trägers 52 hermetisch dicht eingelötet. An dem zylindrisch gebogenen Isolierstoffstreifen 100 ist an dessen den Kontaktfingern 102 gegenüberliegenden Rand 104 ein streifenförmiger, im wesentlichen senkrecht zu dem zylindrisch gebogenen Isolierstoffstreifen 98 verlaufender, ebenfalls flexibler Ansatz 106 vorgesehen. In diesen Ansatz 106 sind die Leiter 108 der Leiterstruktur geführt. Der Ansatz 106 läuft in einen mehrpoligen Stecker 110 aus.

Auf diese Weise wird eine Verbindung hergestellt von einem Anschlußdraht eines elektrischen Bauteils in dem Innenraum 76 über den Lötkontakt 92, Leiterbahn 90, Durchführung 82, Leiterbahn 94, Durchführung 86, Kontaktfinger 102 und Leiter 108 zu einem Kontaktstift des mehrpoligen Steckers 110. Durch das Einlöten der Kontaktfinger 102 in die Metallisierung 88 der Durchführungen 86 erfolgt ein hermetisch dichter Abschluß des Innenraumes 76 auch im Bereich der Durchführungen 86. Der Strompfad von dem elektrischen Bauteil bis zu der Durchführung 86 einschließlich der Leiterbahnen 94 verläuft innerhalb des Innenraumes 76.

Nach Fig.1 ist der zweite Oberflächenteil durch einen Abdeckring 112 abgedeckt. Es kann auch, wie in Fig.6 dargestellt ist, der erste Gehäuseteil 12 mit dem zylindrisch gebogenen, die Leiterstruktur enthaltenden Isolierstoffstreifen 98 durch eine abschirmende Kappe 114 abgedeckt sein, deren trägerseitiger Rand 116 nach außen gewölbt ist und sich über den zweiten Oberflächenteil 80 des Trägers 52 erstreckt.

Fig.4 zeigt eine abgewandelte Ausführung. Entsprechende Teile sind in Fig.4 mit den gleichen Bezugszeichen versehen wie in Fig.2 und 3.

Bei der Ausführung nach Fig.4 ist statt der vorstehenden Leiste 62 eine Ringnut 118 auf der ersten Seite des Trägers 52 vorgesehen. Die Ringnut 118 bildet ebenfalls eine Stufe 120. Der erste Gehäuseteil 12 liegt mit der Außenfläche seines Randes 66 an dieser Stufe 120 an. Eine Metallisierung ist in einem Ringbereich der Oberfläche des Trägers 52 vorgesehen, der sich nach außen an die Ringnut 118 anschließt. Dort ist der Träger 52 durch eine Lötnaht 122 mit dem Rand 66 des ersten Gehäuseteils 12 verbunden.

## Patentansprüche

1. Hermetisch dichte Baugruppe mit
- elektrischen Bauteilen,
- einem die elektrischen Bauteile umschließenden, einen hermetisch dicht abgeschlossenen Innenraum (76) bildenden Gehäuse (10) mit einem ersten und einem zweiten Gehäuseteil (12 bzw. 14) und
- Mitteln zur hermetischen Durchführung von elektrischen Verbindungen durch das Gehäuse (10) zum Anschluß der elektrischen Bauteile,
**dadurch gekennzeichnet, daß**
(a) zwischen dem ersten und dem zweiten Gehäusteil (12 bzw. 14) ein sich längs der Ränder der Gehäuseteile (12,14) erstreckender, flacher, isolierender Träger (52) angeordnet und längs einer ersten Dichtlinie mit dem ersten und längs einer zweiten, außerhalb der ersten Dichtlinie verlaufenden zweiten Dichtlinie mit dem zweiten Gehäuseteil (12 bzw. 14) hermetisch dicht verbunden ist, so daß
(b) ein erster Oberflächenteil (78) auf einer dem ersten Gehäuseteil (12) zugewandten ersten Seite des Trägers (52) an den Innenraum (76) und ein zweiter Oberflächenteil (80) des Trägers (52) an einen Außenraum angrenzt,
(c) auf der gegenüberliegenden, dem zweiten Gehäuseteil (14) zugewandten zweiten Seite des Trägers (52) innerhalb des Innenraumes (76) Leiterbahnen (94) zur Verbindung mit den elektrischen Bauteilen gebildet sind,
(d) in dem Träger (52) im Bereich des zweiten Oberflächenteils (80) Durchführungen (86) mit metallisierten Flächen gebildet sind, die mit den Leiterbahnen (94) in Verbindung stehen, und
(e) in die im Bereich des zweiten Oberflächenteils (80) gebildeten Durchführungen (86) Kontaktfinger (102) von Anschlußleitungen hermetisch eingelötet sind.

2. Hermetisch dichte Baugruppe nach Anspruch 1, **dadurch gekennzeichnet, daß** in dem Träger (52) im Bereich des ersten Oberflächenteils (78) Durchführungen (82) mit metallisierten Flächen gebildet sind, die mit den Leiterbahnen (94) in Verbindung stehen und mit elektrischen Bauteilen im Innenraum (76) verbunden sind.

3. Hermetisch dichte Baugruppe nach Anspruch 1 oder 2, **dadurch gekennzeichnet, daß**
(a) der zweite Gehäuseteil (14) eine radiale Ringfläche (54) bildet, auf welcher der ringförmige Träger (52) mit seiner zweiten Seite aufliegt,
(b) der Träger (52) längs seiner äußeren Umfangsfläche hermetisch dicht mit dem zweiten Gehäuseteil (14) verbunden ist,
(c) der Träger (52) auf seiner ersten Seite im Abstand von dem äußeren Rand eine ringförmige Stufe (64;120) bildet,
(d) der erste Gehäuseteil (12) an seinem Rand (66) mit seiner Außenfläche an der Stufe (64) anliegt und dort mit dem Träger (52) hermetisch dicht verbunden ist, wobei außerhalb dieses Randes (66) der zweite Oberflächenteil (80) und innerhalb des Randes (66) der erste Oberflächenteil (78) des Trägers (52) gebildet ist, und
(e) die Leiterbahnen (95) von der Ringfläche (54) des zweiten Gehäuseteils (14) durch eine isolierende Schicht (60) getrennt sind.

4. Hermetisch dichte Baugruppe nach Anspruch 3, **dadurch gekennzeichnet, daß** die Stufe (64) von einer ringförmigen, vorstehenden Leiste (62) des Trägers (52) gebildet ist.

5. Hermetisch dichte Baugruppe nach Anspruch 3**, dadurch gekennzeichnet, daß** die Stufe (120) von einer Ringnut (118) in der Oberfläche des Trägers (52) auf der zweiten Seite desselben gebildet ist.

6. Hermetisch dichte Baugruppe nach einem der Ansprüche 1 bis 5, **dadurch gekennzeichnet, daß** die Kontaktfinger (102) Teile einer mehradrigen, flächigen Leiterstruktur in einem flexiblen Isolierstoffstreifen (96) bilden ("Flex-Verbindung").

7. Hermetisch dichte Baugruppe nach Anspruch 6, dadurch gekennzeichnet, daß der die Leiterstruktur enthaltende flexible Isolierstoffstreifen (96) einen zylindrisch gebogenen Abschnitt (98) enthält, der den ersten Gehäuseteil (12) manschettenartig umgibt und längs seines dem Träger (52) und dem zweiten Gehäuseteil (14) zugewandten Randes (100) die Kontaktfinger (102) aufweist, die in die Durchführungen (86) des Trägers (52) eingelötet sind.

8. Hermetisch dichte Baugruppe nach Anspruch 7, **dadurch gekennzeichnet, daß** an dem zylindrisch gebogenen Isolierstoffstreifen (98) an dessen den Kontaktfingern (102) gegenüberliegenden Rand (104) ein streifenförmiger, im wesentlichen senkrecht zu dem zylindrisch gebogenen Isolierstoffstreifen (98) verlaufender, ebenfalls flexibler Ansatz (106) vorgesehen ist, in welchen die Leiter (108) der Leiterstruktur geführt sind und der in einen mehrpoligen Stecker (110) ausläuft.

9. Hermetisch dichte Baugruppe nach Anspruch 7 oder 8, **dadurch gekennzeichnet, daß** der erste Gehäuseteil (12) mit dem zylindrisch gebogenen, die Leiterstruktur enthaltenden Isolierstoffstreifen (98) durch eine abschirmende Kappe (114) abgedeckt ist, deren trägerseitiger Rand (116) nach außen gewölbt ist und sich über den zweiten Oberflächenteil (80) des Trägers (52) erstreckt.

10. Hermetisch dichte Baugruppe nach einem der Ansprüche 1 bis 9, **dadurch gekennzeichnet, daß** der Träger (52) aus bearbeitbarer Oxidkeramik besteht.

11. Hermetisch dichte Baugruppe nach einem der Ansprüche 1 bis 10, **dadurch gekennzeichnet, daß** der Träger (52) längs der Dichtlinien mit einer Metallisierung (68,70) versehen und mit dem ersten und zweiten Gehäuseteil (12 bzw. 14) durch Lötnähte (72 bzw. 74) hermetisch verbunden ist.
